# EUROPEAN PATENT SPECIFICATION

(11) **EP 2 345 098 B1**
(45) Date of publication and mention of the grant of the patent: **29.06.2016**
(21) Application number: 09752073.8
(22) Date of filing: 09.11.2009
(51) Int. Cl.: H01M 2/16, H01M 6/06, H01M 10/28, H01M 6/08, H01M 2/18

(54) **ALKALINE CELL WITH IMPROVED SEPARATOR**
ALKALIZELLE MIT VERBESSERTEM SEPARATOR
PILE ALCALINE AVEC UN SÉPARATEUR AMÉLIORÉ

(30) Priority: 10.11.2008 US 291408
(43) Date of publication of application: 20.07.2011
(73) Proprietor: Duracell U.S. Operations, Inc., Wilmington, DE 19801 (US)
(72) Inventor: ANGLIN, David, Lloyd, Brookfield Connecticut 06804 (US); CERVERA, James, Joseph, Sandy Hook Connecticut 06482 (US); SHELEKHIN, Alexander, Boris, Ridgefield Connecticut 06877 (US); HAMILTON, Terry, Lee, Danbury Connecticut 06811 (US); SMITH, Robert, Martin, Southbury Connecticut 06488 (US); GIBBONS, Daniel, William, Southbury Connecticut 06488 (US)
(74) Representative: Hoyng Rokh Monegier LLP
(86) International application number: PCT/US2009/063718
(87) International publication number: WO 2010/054306

(56) References cited:
- WO-A1-2008/065630
- WO-A1-2008/102318
- WO-A2-01/84653
- US-A- 4 669 183

## Description

### FIELD OF THE INVENTION

The invention relates to separators for alkaline cells. The invention relates to an alkaline cell, particularly with anode comprising zinc and cathode comprising manganese dioxide and improved separator between anode and cathode.

### BACKGROUND

The primary alkaline cell typically contains an anode comprising zinc anode active material, a cathode comprising manganese dioxide cathode active material, alkaline electrolyte, and an electrolyte permeable separator. The separator is typically of a single layer of a nonwoven material containing cellulosic fibers or polyvinylalcohol fibers or blend of both cellulosic and polyvinylalcohol fibers. A typically prior art separator for alkaline cell may be composed of a sheet of separator material which is wrapped around itself to produce a dual separator layer, wherein each layer is of the same material composition. Prior art separators for alkaline cells may have two layers of different material, which are glued together. In U.S patent 4,361,632 a dual layer separator is disclosed wherein one of the layers is a coating comprising polyvinylalcohol which adheres to a base absorbent layer.

Another dual layer separator used in alkaline cells, may contain an outer layer of cellophane and an inner layer composed of a blend of nonwoven rayon and polyvinylalcohol fibers. Polyacrylic acid is commonly used to glue the cellophane layer to the layer composed of rayon and polyvinylalcohol fibers to produce a dual layer laminated separator as described, for example, in U.S. patent 4,902,590. The cellophane layer has small pores which is intended to prevent zinc dendrites from passing therethrough during normal cell usage. If zinc dendrites pass through the separator they can cause shorting of the cell. In conventional dual layer separators employing cellophane as one of the layers, the gluing or bonding of the sheets to each other is necessary, since cellophane is very fragile and would tear or crack if not bonded to another layer. The glued layers, however, are subject to curl during the winding of the separator into a tubular configuration. The use of glue, to bond facing surfaces of the separator layers also has the disadvantage that the glue or other bonding material can retard the rate of electrolyte ion transport through the separator body, which in turn can reduce cell performance in high power application.

A separator having a dense layer integrally laminated to an impregnate layer is disclosed in U.S. patent 6,379,836. Both layers contain alkaline proof cellulose fibers, which may include wood pulp. The fibers can be treated with sodium hydroxide so that they do not shrink in the presence of alkaline electrolyte.

The separator for a cylindrical alkaline cell may typically be prepared by crossing two flat strips of the separator material at right angles so there is an overlay portion at the center of the two crossed strips. (Each strip may be composed of a single or dual layer of material as above indicated.) A separator tube may then be formed by inserting two crossed strips into a tube and heat sealing the bottom, that is, the portion where the two strips have been crossed. The side edges may also be heat sealed, thereby forming a separator tube having a closed end and opposing open end. Such separator tube may be inserted into the open end of the alkaline cell cylindrical casing, typically in the arrangement that its outer surface abuts against the inside surface of the cathode. Other methods of sizing the separator for alkaline cells are described, for example, in U.S 4,669,183 and US 2008/0124621 A1.

The anode active material comprises zinc particles admixed with zinc oxide and conventional gelling agents, such as carboxymethylcellulose or acrylic acid copolymers, and electrolyte. The gelling agent holds the zinc particles in place and in contact with each other. A conductive metal nail, known as the anode current collector, is typically inserted into the anode material in contact with the end cap which forms the cell's negative terminal. The alkaline electrolyte is typically an aqueous solution of potassium hydroxide, but other alkali solutions of sodium or lithium hydroxide may also be employed.

The cathode material is typically of manganese dioxide particles and may include small amounts of carbon or particulate graphite to increase conductivity. Electrolytic MnO₂ (EMD) is the preferred form of manganese dioxide for alkaline cells because of its high density and since it is conveniently obtained at high purity by electrolytic methods. The particulate graphite and aqueous KOH solution can be added to the manganese dioxide to form a cathode mixture. Such mixtures form a moist solid mix which can be fully compacted into the cell casing. The cathode material can be preformed into the shape of disks forming annular rings inserted into the cell in stacked arrangement, for example, as shown in U.S. patent 5,283,139, and then recompacted.

Since commercial cell sizes are fixed, it has been desirable to attempt to increase the capacity, i.e., the useful service life of the cell, by increasing the surface area of the electrode active material and by packing greater amounts of the active material into the cell. This approach has practical limitations. If the active material is packed too densely into the cell, this can reduce the rate of electrochemical reaction during discharge, in turn reducing service life. Other deleterious effects such as polarization can occur, particularly at high current drain (high power applications). Polarization limits the mobility of ions within the electrode active material and within the electrolyte, which in turn reduces service life. The contact resistance between the MnO₂ cathode active material and the cell casing of an alkaline cell also reduces service life. Such contact resistance losses typically increases, particularly as the cell is discharged during high power applications (between about 0.5 and 1 watt).

There are increasing commercial demands to make primary alkaline cells better suitable for high power application. Modern electronic devices such as cellular phones, digital cameras and toys, portable flash units, remote control toys, camcorders and high intensity lamps are examples of such high power applications. Such devices require high current drain rates, typically pulsed drain, of between about 0.5 and 2 Amp, more usually between about 0.5 and 1.5 Amp. Correspondingly, they require operation at power demands between about 0.5 and 2 Watt.

At high power application the chance for zinc dendrite formation may be heightened as the cell is used for a time, stored, and then used again. It has been determined that conventional alkaline cell separators may not be as effective in preventing zinc dendrites particles from occasionally passing through the separator material, when the cell has been used frequently in high power application. Also, conventional separators when wetted with alkaline electrolyte tend to swell to thicknesses which may typically exceed 300 mircron, or even over about 350 micron. Thus, it would be desirable to reduce the separator thickness to provide more cell volume for anode and cathode material. Also separators which can accommodate high ionic transport rate, can be more suitable for use in alkaline cells used for high power service. In sum, it is desirable to improve the separator so that it may increase the useful service life of conventional primary alkaline cells, particularly for cells to be used in high power applications.

### SUMMARY OF THE INVENTION

The invention is directed to an alkaline cell having an improved separator. The alkaline cell typically has an anode comprising zinc, a cathode comprising manganese dioxide, and an alkaline electrolyte such as aqueous potassium hydroxide. The alkaline cell may typically have a cylindrical casing (housing) having an open end and opposing closed end. After the cell contents are inserted an end cap assembly can be crimped in place to close the casing open end.

In a principal aspect the improved separator of the invention is a dual layer separator. The separator of the invention is composed of two sheets of material of different composition, which are overlaid one over the other and wound into a tubular shape. The bottom end of the wound separator is folded closed and heat sealed. The remaining portion of the separator, that is, the facing surfaces of the two wound sheets which form the separator body, are not glued or otherwise bonded to each other. The facing sheets are thus not chemically or physically bonded to each other and are not laminated or glued together, but rather are held in place one sheet overlaid onto the other simply by the folded and closed bottom end. If the separator closed end is cut open the two separator sheets are easily peeled apart. It has been determined that a separator formed in this manner with two overlaid sheets of different material with facing surfaces of each sheet not glued and not bonded together, results in an improved separator for alkaline cells. In particular the separator of the invention provides the alkaline cell with longer service life when the cell is used in high power application, for example, to power a digital camera and the like.

WO2008/102318 discloses a separator composed of two sheets where the bottom end includes a disc that may be crimped or attached by adhesive The separator of the invention provides greater flexibility of design since each layer is chosen from a different material. For example, one of the sheets may have high ionic transport properties which allows for excellent ionic transport of electrolyte therethrough in high power application. Such sheet, however, may not be rigid enough to be used in the form of a single layer separator. Thus, in keeping with the concept of the invention a second separator sheet of different material can be overlaid onto this first sheet to provide greater rigidity and structural integrity to the wound separator. The two separator materials are selected so that the need for bonding the facing surfaces of the two sheets together is rendered unnecessary. In the present invention, the facing surfaces of the two sheets are left not bonded and not laminated together. This reduces resistance through the separator and improves electrolyte ion transport therethrough, in turn improving the cell's rate capability.

In one aspect the separator of the invention is composed of two separator sheets, namely a first sheet overlaid onto a second sheet, and the two overlaid sheets are wound together into a tubular shape. Each sheet when viewed flat has a rectangular or substantially rectangular configuration. When viewed flat each sheet has a pair of opposing vertical edges, one forming the leading edge and the other forming the trailing edge, and a pair of lateral edges forming the top edge and opposing bottom edge. (The leading edge is the edge leading in the direction of winding) One of the two sheets, e.g. the first sheet forms the outer layer or portion of the outer layer of the wound separator and the other sheet, e.g. the second sheet, forms the inner layer or portion of the inner layer of the wound separator. The separator is formed by overlaying one of the two sheets onto the other. The overlaid sheets are placed around a mandrel which is spun to form a tubular shaped separator. (The above indicated sheet leading edges are placed so that they are in the leading direction of spin of said mandrel.) The bottom edge of the wound separator is folded and heat sealed closed forming a tubular shape with bottom end closed and opposing end open. The facing surfaces of the two sheets which form the separator body are left not bonded together as above indicated.

One of the two separator sheets, e.g., the first sheet, is desirably formed of a blend of polyvinylalcohol fibers and rayon fibers. (Rayon is a semisynthetic material composed of regenerated cellulose or manufactured fibers composed of regenerated cellulose in which substituents have replaced not more than 15% of the hydrogen contained in the cellulose hydroxyl groups.) The cellulosic rayon fibers tend to absorb electrolyte, and the polyvinylalcohol fibers are hydrophilic for the alkaline electrolyte and are thus easily wetted with the electrolyte. The polyvinylalcohol fibers also provide structural integrity to the separator, and do not degrade in the presence of alkaline electrolyte. In said first sheet the polyvinylalcohol fibers may comprise between about 20 and 80 wt%, typically about 80 wt% and the rayon fibers may comprise between about 80 and 20 wt%, typically about 20 wt% of the sheet weight. Such sheet comprising polyvinylalcohol fibers and rayon fibers is preferred and desirably has a thickness of between about 30 and 120 micron (dry), and a basis weight of between about 20 and 40 g/m² (dry), and a porosity of between 75 and 85 percent (pore volume/total volume x 100) dry. Alternatively, instead of comprising a blend of polyvinylalcohol fibers and rayon fibers, the first sheet may be composed of 100 percent cellulosic material. Other suitable materials for the first sheet may be 100% polyvinylalcohol or 100% NYLON 66 fiber, but the blend of polyvinylalcohol and rayon fibers is preferred.

The other (second) separator sheet is desirably formed of a material containing wood pulp and polyvinylalcohol fibers. The wood pulp (dry) is composed essentially of wood cellulosic fibers but may also contain some residual pulp compounds commonly found in wood processed by chemical pulping methods. The wood pulp may be made from trees which are coniferous or having small or large leaves, and preferably from hardwood trees. The wood pulp employed in said second sheet is preferably mercerized, that is, wood pulp which is treated with sodium hydroxide to help dissolve residuals, strengthen the fiber, and make the fiber more resistant to attack by alkaline electrolyte. Such residual compounds may include, for example, lignin, resin, and hemicellulose. The residual compounds typically make up less than about 3 percent by weight of the dry wood pulp for use in said (second) separator sheet. Thus the term "wood pulp" as used herein is understood to be dried wood pulp cellulosic fiber, which contain at least about 97 percent by weight wood cellulosic fibers, with the remainder comprising less than about 3 percent by weight residual compounds.

The wood pulp fiber used in this (second) separator sheet is distinguishable over rayon fiber in that rayon fiber is formed from regenerated cellulose (chemically reformed cellulosic material) as by denitration of cellulose nitrate fiber (Chardonette process), or regenerated cellulose in which substituents have replaced no more than about 15% of hydrogen in the cellulose hydroxyl groups, or regenerated cellulose formed by the viscose process. Such regenerative processes impart physical properties specifically associated with rayon fiber. The term "regenerated cellulose" refers to cellulose which has undergone a chemical change producing a soluble chemical derivative of cellulose and a cellulosic fiber is regenerated therefrom. For example, in the viscose process for making rayon fiber, wood pulp which may also contain lignin, is treated with strong alkali (NaOH) forming an alkali cellulose, which in turn is converted to cellulose xanthate by reaction with carbon disulfide (CS₂). The reaction product is typically held at 25-35° C for several hours with excess carbon disulfide removed. The product is then dissolved in dilute NaOH, wherein it becomes completely soluble for the first time. This solution is known as viscose. The fresh viscose solution is allowed to ripen for a few days so that it begins to coagulate by gradual decomposition reaction involving hydrolysis and saponification. The coagulated viscose solution is then extruded through a spinnert (plate or head with small apertures). As the viscose exits the spinneret it passes into a bath of sulfuric acid (H₂SO₄) resulting in a regenerated cellulosic material, that is, the formation of rayon filaments. The rayon filaments are then stretched by drawing into rayon fibers. The rayon fibers may be cut to desired length.

By contrast the "wood pulp" as above referenced in the second separator sheet is not of regenerated cellulose and thus not subjected to processing specifically associated with manufacture of rayon. The wood pulp in this second sheet is preferably a mercerized wood pulp, that is, it has been treated with sodium hydroxide enough to release and dissolve wood pulp residuals, essentially the lignin, resin, and hemicellulose materials contained in the pulp. The chemical composition of the wood pulp cellulosic fiber itself is essentially left unchanged, though some crystalline structural changes may occur. The mercerized wood pulp used in this second separator sheet has a residuals content less than about 3 wt% preferably less than about 1 wt%. The lignin content in the mercerized wood pulp is preferably less than 1 wt.%, typically less than about 500 ppm (parts by weight lignin per million parts mercerized pulp). Thus, the mercerized wood pulp for use in the second separator sheet is essentially composed of wood pulp cellulosic fiber containing less than about 1 wt%, preferably less than 500 ppm lignin. The mercerized wood pulp content in the second separator sheet is desirably between about 75 and 82 wt% with polyvinylalcohol fibers included comprising between about 18 and 25 wt%, typically about 18 wt% of the sheet weight. A preferred composition for this sheet is 82 wt% wood pulp and 18 wt% polyvinylalcohol fibers. Another preferred composition for this second sheet is 75 wt% wood pulp and 25 wt% polyvinylalcohol fibers. A desirable thickness of such sheeting comprising wood pulp and polyvinylalcohol fibers may be between about 30 micron and 50 micron (dry), the basis weight may be between about 20 g/m² and 32 g/m² (dry) and a porosity may be between about 50 and 70 percent dry. Thus, it is preferred that at least one of said first and second sheets includes material therein dissimilar from and not included in the other sheet.

The two separator sheets can also be characterized by virtue of their ability to impede air flow. The wood pulp rich sheet (second sheet) has low air flow (permeability) as defined by its Gurley air permeability numbers (ASTM D-737) as measured on a Gurley Densometer (low, standard and high pressure models). These devices denote the time needed to pass a certain volume of air through the separator sheet using a defined air flow orifice size. The Densometers are designed to measure papers and nonwovens of lower air permeability. A low air flow paper can have resistance to air flow values, for example, a Gurley Number of the level about 20, 30, or 50 (using 4150 High Pressure Densometer). The term Gurley Number as used and defined herein is the time in seconds it takes to pass 10 cubic centimeters (cm³) volume of air at atmospheric pressure through the separator sheet per square inch of sheet surface facing the incoming flow of air (using 4150 High Pressure Densometer). The term Gurley seconds may be used interchangeably with Gurley Number. There are straightforward calculations to convert Gurley seconds as measured on one instrument, at one volume of air and orifice size to other Densometers at different volumes and orifices. The second separator sheet comprising between about 75 and 82 wt% of wood pulp and with polyvinylalcohol fibers comprising between about 18 and 25 wt% of sheet weight has a measured Gurley air permeability No. of between about 20 and 60 seconds.

The high permeability polyvinylalcohol rich papers such as the above mentioned preferred first sheet, e.g., comprising 80 wt.% polyvinylalcohol and 20 wt% rayon fibers, require different instrumentation to measure their air permeability. Such sheets have very high air permeability.

The appropriate instrument to measure air flow permeability of such high content polyvinylalcohol sheet is a Gurley 4301 Permeometers or Frazier Permeometers. When using such Permeometer instruments to measure high permeability sheeting, the results are reported in cubic feet of air flow at atmospheric pressure per minute, per square foot of material facing the inflow of air. These instruments measure the actual flow in cubic feet per minute, per square foot of material facing the inflow of air (assume 0.5 psi pressure drop). (Air permeability values of high permeability papers can typically range from 10 to 200 cubic feet per minute (and higher) per square foot of material facing the inflow of air. The preferred first sheet comprising 80 wt.% polyvinyalcohol and 20 wt% rayon has an air permeability of more than 100, typically between about 100 and 200 cubic feet atmospheric air passing per minute per square foot of sheeting facing the inflow of air, as measured typically using a Permeometer.

Either the first or second of the above two sheets may form the inner layer of the wound separator or at least a portion of the inner layer. The other sheet, may form the outer layer of the wound separator or at least a portion of the outer layer. In a preferred embodiment the inner layer of the wound separator is formed of the sheet comprising the blend of polyvinylalcohol fibers and rayon fibers. In that case the outer layer of the wound separator is formed of the sheet comprising the blend of wood pulp and polyvinylalcohol fibers.

The sheet comprising the blend of polyvinylalcohol fiber and wood pulp exhibits high ionic mobility, that is, permits very good ionic transport of alkaline electrolyte therethrough, especially compared to cellophane. However, this sheet comprising polyvinylalcohol fiber and wood pulp has characteristically tortuous small pore structure which serves to keep zinc particles or zinc dendrites from passing therethrough, even though the cell is used in high power application and stored intermittently between periods of application.

The overlaid sheet comprising polyvinylalcohol and rayon fibers improves the structural integrity of the separator. This latter sheet also exhibits good separator properties allowing alkaline electrolyte ions to easily pass therethrough. This sheet provides the necessary structural integrity and resiliency to the wound separator. Such resiliency helps to keep the top edge of the wound separator flush against the bottom surface of the sealing disk used to seal the open end of the cell casing.

In an important aspect the separator of the invention is formed of two overlaid sheets (first and second sheet) of different material with the facing surfaces of the sheets left not bonded to each other. The overlaid sheets are wound on a mandrel to form a tubular shape and the bottom edge of the wound separator is closed and heat sealed as above indicated. (The bottom edge of the separator as used herein shall be understood to be the edge closest to the closed bottom end of the cell casing when the cell is viewed in vertical position with the casing closed end on bottom.) Various configurations of the position of each sheet relative to each other are possible and within the scope of the invention. The two separator sheets may overlap laterally so that a portion of each sheet forms a different portion of the separator outside surface. In this latter embodiment a portion of each sheet also forms a different portion of the separator inner surface. Alternatively, the separator may be formed of two sheets wherein the first sheet forms an outer layer which completely covers the second sheet. In either of these embodiments the top edge of one of the first and second sheets may extend vertically beyond the top edge of the other sheet. (The separator "top edge" as used herein shall be understood to mean the separator edge which is closest to the open end of the cell casing when the cell is held in vertical position with the casing open end on top.) Conversely, the bottom edge of one of the first and second sheets may extend vertically beyond the bottom edge of the other sheet.

### BRIEF DESCRIPTION OF THE DRAWINGS

Fig. 1 is a pictorial cut-away view of a representative alkaline cell showing location of the separator of the invention.
Fig. 1A is an elevational cross sectional view of the bottom portion of the cell.
Fig. 2 is an embodiment showing placement of the two sheets comprising the separator before winding.
Fig. 2A is a mandrel for clockwise winding of the sheets shown in Fig. 2.
Fig. 2B is a pictorial view of the separator wound from the sheets shown in Fig. 2.
Fig. 2C is a top view of the wound separator shown in Fig. 2B.
Fig. 2D is a bottom view of Fig. 2B showing the closed folded bottom end of the wound separator shown in Fig. 2B.
Fig. 3 is an embodiment showing placement of the two sheets comprising the separator before winding.
Fig. 3A is a mandrel for clockwise winding of the sheets shown in Fig. 3.
Fig. 3B is a pictorial view of the separator wound from the sheets shown in Fig. 2.
Fig. 3C is a top view of the wound separator shown in Fig. 3B.
Fig. 3D is a bottom view of Fig. 3B showing the closed folded bottom end of the wound separator shown in Fig. 3B.
Fig. 4 is an embodiment showing placement of the two sheets comprising the separator before winding.
Fig. 4A is a mandrel for clockwise winding of the sheets shown in Fig. 4.
Fig. 4B is a pictorial view of the separator wound from the sheets shown in Fig. 4.
Fig. 4C is a top view of the wound separator shown in Fig. 4B.
Fig. 4D is a bottom view of Fig. 4B showing the closed folded bottom end of the wound separator shown in Fig. 4B.
Fig. 5 shows a separator configuration as in Fig. 2B except that one of the sheets forming the separator is extended vertically above the top edge of the other sheet.
Fig. 5A is a top view of the separator shown in Fig. 5.
Fig. 6 shows a separator configuration as in Fig. 2B except that one of the sheets forming the separator is extended vertically below the bottom edge of the other sheet.
Fig. 6A is a top view of the separator shown in Fig. 6.
Fig. 7 shows a separator configuration as in Fig. 3B except that the inner sheet is extended vertically above the top edge of the outer sheet.
Fig. 7A is a top view of the separator shown in Fig. 7.
Fig. 8 shows a separator configuration as in Fig. 3B except that the outer sheet is extended vertically above the top edge of the inner sheet.
Fig. 8A is a top view of the separator shown in Fig. 8.
Fig. 9 shows a separator configuration as in Fig. 4B except that the inner sheet is extended vertically above the top edge of the outer sheet.
Fig. 9A is a top view of the separator shown in Fig. 9.
Fig. 10 shows a separator configuration as in Fig. 4B except that the outer sheet is extended vertically above the top edge of the inner sheet.
Fig. 10A is a top view of the separator shown in Fig. 10.

### DETAILED DESCRIPTION

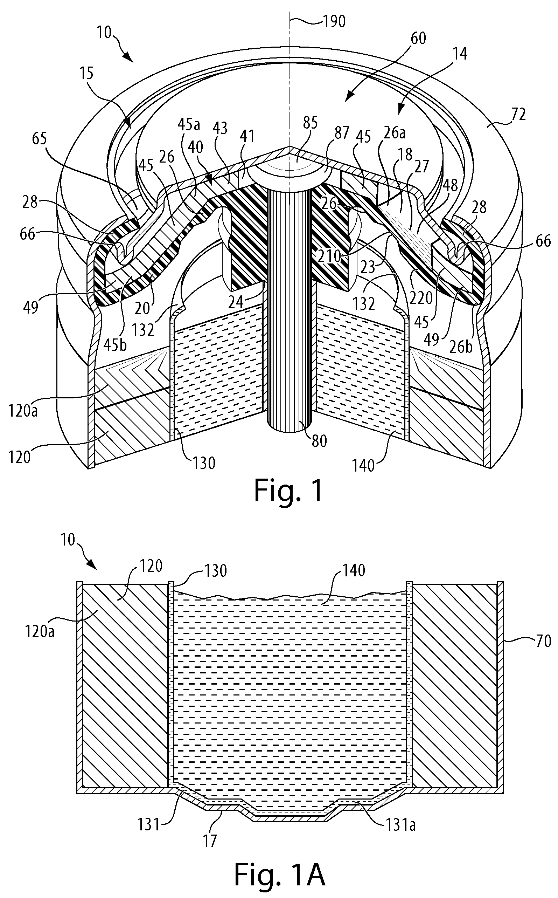

A specific alkaline cell 10 configuration in which the separator of the invention may be advantageously employed is shown in Fig. 1. The alkaline cell 10 shown in Fig. 1 (but not the separator of the invention) is also illustrated in commonly assigned patent publication US-2008-0102365-A1. The separator of the invention has broad application to alkaline cells, in particular cells having an anode comprising zinc and a cathode comprising manganese dioxide and alkaline electrolyte. The application of the separator of the invention as applied to the cell of Fig. 1 is given by way of example of a specific use and not intended to be limited to the cell structure shown in Fig. 1.

In the cell 10 embodiment of Fig. 1, there is an end cap assembly 14 and cylindrical housing 70 having an open end 15 and opposing closed end 17, wherein the end cap assembly 14 is inserted into said open end 15, to seal the cell. The end cap assembly 14 is particularly applicable to cylindrical alkaline cells of standard AAA (44 x 9 mm), AA (49 x 12 mm), C (49 x 25 mm) and D (58 x 32 mm) size. The end cap assembly 14 is particularly useful for smaller size alkaline cells such as AAA and AA size cell, but may be used advantageously in the C and D size cells as well. Such alkaline cells, as cell 10 (Figs. 1 and 1A), desirably has an anode 140 comprising zinc, a cathode 120 comprising MnO₂, with electrolyte permeable separator 130 of the invention therebetween. The anode 140 and cathode 120 typically comprises an electrolyte of aqueous potassium hydroxide. Alternatively, the anode 140 may comprise zinc, the cathode 120 may comprise nickel oxyhydroxide, and the electrolyte typically comprising aqueous potassium hydroxide. Cathode 120 may be stacked in disks 120a, each having a central opening for anode material 140 to be inserted with separator 130 lying flush between anode 140 and cathode 120 (Figs. 1 and 1A).

The end cap assembly 14 comprises a metal support disk 40, an underlying sealing disk 20, and current collector 80 penetrating through the central aperture 24 of sealing disk 20 and in contact with anode 140. A separate terminal end cap 60 of metal is stacked over the metal support disk 40 as shown in Figs. 1. The cell's central longitudinal axis 190 passes through the current collector 80 (Fig. 1). Anode current collector 80 is brass, preferably plated with tin or indium to help suppress gassing. The head 87 of current collector 80 may be welded directly to the underside of end cap 60.

The separator 130 of the invention has excellent structural integrity and resiliency which enables the separator top edge 132 to hold flush against the bottom surface 220 of sealing disk 20. The separator 130 top edge 132 holds flush against the bottom surface 220 of sealing disk 20 and does not become dislodged even if the cell is inadvertently dropped to a hard surface from a height of about 1 meter. Such property prevents any anode 140 material from passing over separator edge 132 into the cathode 120 which would cause immediate voltage drop or shorting of the cell, making the cell unusable. The excellent resiliency of the separator 130 of the invention keeping edge 132 tightly pressed against the bottom surface 220 of sealing disk 20 is an advantage of the invention. After cathode 120, separator 130 and anode 140 are inserted into housing 70, end cap assembly 14 is inserted into the housing open end 15. The peripheral edge 72 of housing 70 is crimped over peripheral edge 28 of insulating sealing disk 20. The peripheral edge 28 of the insulating sealing disk 20 is in turn crimped over both the peripheral edge 66 of the end cap 60 and the edge 49 of the metal support disk 40. Preferably, downwardly extending wall 26 of insulating disk 20 lies flush against the inside surface of downwardly extending wall 45 of metal support disk 40 during assembly.

The metal support disk 40 (Figs. 1) preferably has a substantially flat central portion 43 with an aperture 41 centrally located therein. The metal support disk 40 is preferably formed of a disk of single piece metallic construction having a convoluted surface. A portion of the metal support disk 40 has a downwardly sloping wall 45 and there is at least one burst aperture 48 therethrough. Metal support 40 is constructed of a conductive metal having good mechanical strength and corrosion resistance such as nickel plated cold rolled steel, stainless steel, or low carbon steel.
The downwardly extending wall 45 of the metal support disk 40 extends downwardly toward the cell interior from a high point 45a on the wall 45 of said support disk 40 to a low point 45b on said wall 45 when the cell is viewed in vertical position with the end cap assembly 14 on top. The downwardly extending wall 45 of support disk 40 is preferably straight in the direction of downward slope or can have a slightly convex surface contour (outward bulge) when viewed from outside the cell. Downwardly extending surface 45 terminates in peripheral edge 49.

The insulating sealing disk 20 (Fig. 1) has a convoluted surface including downwardly extending wall 26 wherein a portion of its surface underlies and abuts the aperture 48 in the metal support disk 40 when the cell is viewed in vertical position with the end cap assembly 14 on top. The wall 26 of the sealing disk 20 extends downwardly from a high point 26a on the surface thereof to a low point 26b on the surface thereof when the cell is viewed in vertical position with the end cap assembly 14 on top. Surface 26 of insulating disk 20 is preferably straight in the direction of downward slope (i.e. not bulging in or out) but may also have a slightly convex surface contour when viewed from outside the cell. Downwardly extending surface 26 terminates in upwardly extending peripheral edge 28.

The portion of the downwardly extending surface 26 underlying said aperture 48 in the metal support disk 40 (Fig. 1) has an undercut groove 210 forming thinned rupturable membrane 23. The rupturable membrane 23 abuts the aperture 48 in the metal support disk 40. When gas pressure within the cell rises, said rupturable membrane 23 penetrates through said aperture 48 and ruptures thereby releasing gas into the head space 18 above the membrane 23, that is, the space between the membrane 23 and overlying end cap 60. The gas then passes to the external environment through vent apertures 65 in end cap 60 (Figs. 1).

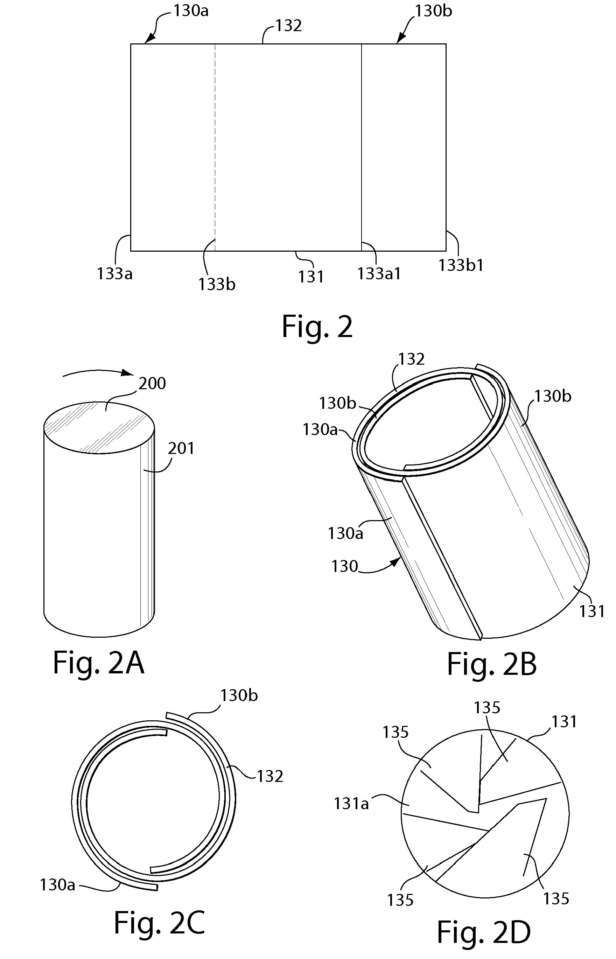

In one embodiment of the invention the separator 130 may have the configuration shown in Fig. 2B. In this embodiment the separator 130 is formed of two layers 130a and 130b wherein the layers overlap laterally so that a portion of each layer forms a portion of the outside surface of the completed separator 130 and a portion of each layer forms a portion of the inside surface as shown best in Fig. 2B. That is, a portion of separator layer 130a and portion of separator layer 130b forms the outer surface of the completed wound separator 130 (Fig. 2B). Conversely, another portion of separator layer 130a and another portion of separator layer 130b forms the inner surface of the completed wound separator 130 (Fig. 2B). Such separator configuration (Fig. 2B) may be formed by placing a first (top) sheet 130a onto an underlying second sheet 130b so that the exposed vertical leading edge 133a of first sheet 130a overlaps underlying leading edge 133b of underlying sheet 130b in the manner shown in Fig. 2. Also the trailing edge 133a1 of the first sheet 130a and trailing edge 133b1 of underlying sheet 130b are both exposed as shown in Fig. 2. The two sheets 130a and 130b may be of rectangular configuration and of same size. The two overlaid sheets 130a and 130b (Fig. 2) can be wound by placing them against the outer surface 201 of a stainless steel mandrel 200 and spinning the mandrel clockwise as indicated in Fig. 2A. A Hibar Winder, e.g. Model S0548 (Hibar Systems Limited, Toronto Canada) can be used to accomplish the winding. Heat is not applied to the separator sheets 130a and 130b during the winding. The separator layers 130a and 130b may be picked up by a feeding drum (not shown) and held in place thereon by partial vacuum and then passed to winding mandrel surface 201. In this case the inner sheet must have sufficient air permeability to allow vacuum holding of the outer paper to the feeding drum. As a final step in the winding process the separator bottom edge 131 may be closed by folding the bottom edge of each sheet 130a and 130b inwardly forming folds 135 and then heat sealing folds 135 to form a closed bottom 131a as shown in Fig. 2D. Prior to the heat sealing of folds 135, a mist of water may be applied to the separator folds 135 at the bottom edge 131 of separator 130 to promote heat sealing of the folded bottom to form closed bottom 131a. The heat sealing may be accomplished by pressing a heated platen at a temperature of between about 180 and 340° C to folds 135 while the wound separator 130 is still on mandrel surface 201. There is preferably no glue inserted between the facing surfaces of the two separator layers 130a and 130b during the winding process. And the facing surfaces of the separator layers, that is, between top edge 132 and bottom edge 131, are thus not chemically or physically bonded together and are not laminated together. The facing surfaces of the separator layers are in contact with each other but are not bonded together between top edge 132 and bottom edge 131. Rather, the facing surfaces of the separator layers are held together primarily because of the closed bottom 131a, which is the only portion of the separator that is heat sealed in order to close the bottom edge 131 of the separator. The separator layers are durable enough so that they do not crack or tear even though they are not bonded together between edges 131 and 132. It is an advantage not to employ glue between the two separator layers, since such glue or other bonding material can retard the rate of electrolyte ion transport through the completed separator 130, especially when the cell is used in high power application. Once the closed bottom 131a is opened or cut off from the remaining separator material, the two layers 130a and 130b can be readily peeled apart. Thus the facing surfaces of layers 130a and 130b remain not glued and not heat sealed or chemically laminated together except that the bottom edges 131 are heat sealed to form closed bottom 131a. The completed wound separator 130 has the configuration shown in Figs. 2B and 2C. After the cathode disks 120a have been placed into housing 70, the completed separator 130 (Fig. 2B) can be inserted in the cell housing 70 so that the outer surface of separator 130 lies against the inside surface of the cathode disks 120a (Figs. 1 and 1A). The separator top edge 132 rests flush against the bottom surface 220 of insulating disk 20 and the closed bottom 131a rests against the closed end 17 of casing 70 as shown in Figs. 1 and 1A. Anode material 140 is then inserted so that the separator 130 lies flush between cathode disks 120a and anode 140. The top edge 132 is sufficiently resilient that it remains flush against the bottom surface 220 of insulating disk 20 during the life of the cell.

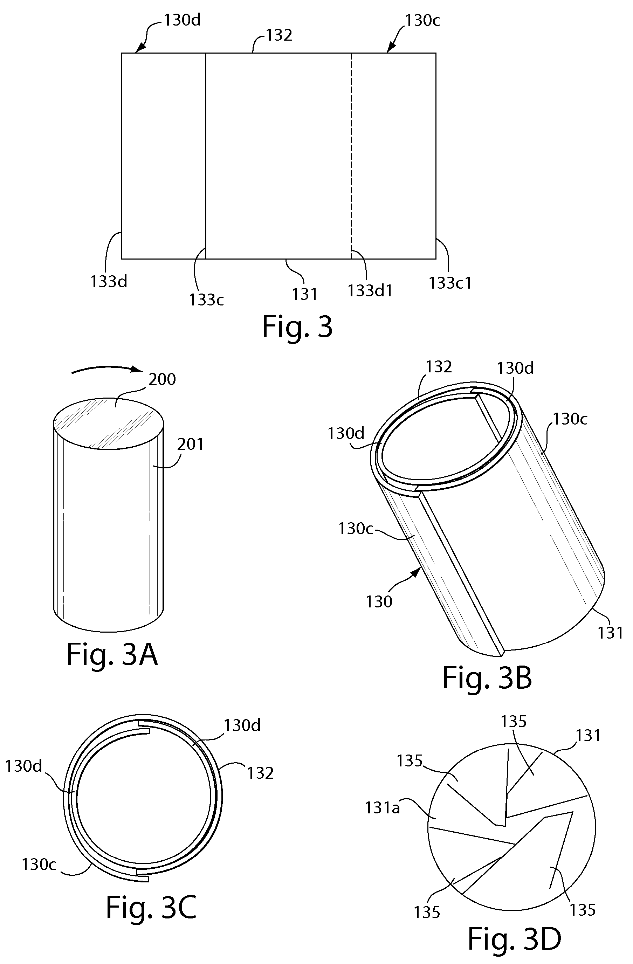

In another embodiment of the invention the separator 130 may have the configuration shown in Fig. 3B. In this embodiment the separator 130 is formed of two layers 130c and 130d wherein the first layer 130c forms an outer layer which completely covers the second layer 130d, that is, underlying inner layer 130d as shown best in Fig. 3B. Such separator configuration (Fig. 3B) may be formed by placing a first (top) sheet 130c onto an underlying second sheet 130d so that the exposed vertical trailing edge 133c1 of first (top) sheet 130c overlaps underlying trailing edge 133d1 of underlying sheet 130d in the manner shown in Fig. 2. Also the leading edge 133d of the underlying sheet 130d extends beyond the leading edge 133c of the first (top) sheet 130c as shown in Fig. 3. The two sheets 130c and 130d may be of rectangular configuration and of same size. The two overlaid sheets 130c and 130d (Fig. 3) can be wound by placing them against the outer surface 201 of a stainless steel mandrel 200 and spinning the mandrel clockwise as indicated in Fig. 3A. A Hibar Winder, e.g. Model S0548 (Hibar Systems Limited, Toronto Canada) can be used to accomplish the winding. As a final step in the winding process the separator bottom edge 131 may be closed by folding the bottom edge of each sheet 130c and 130d inwardly forming folds 135 and then heat sealing folds 135 to form a closed bottom 131a as shown in Fig. 3D. There is preferably no glue inserted between the facing surfaces of the two separator layers 130c and 130d during the winding process. And the facing surfaces of the separator layers, that is, between top edge 132 and bottom edge 131, are thus not chemically or physically bonded together and are not laminated together. The facing surfaces of the separator layers are in contact with each other but are not bonded together between top edge 132 and bottom edge 131. Rather, the facing surfaces of the separator layers are held together primarily because of the closed bottom 131a, which is the only portion of the separator that is heat sealed in order to close the bottom end of the separator. The separator layers are durable enough so that they do not crack or tear even though they are not bonded together between edges 131 and 132. It is an advantage not to employ glue between the two separator layers, since such glue or other bonding material can retard the rate of electrolyte ion transport through the completed separator 130, especially when the cell is used in high power application. Once the closed bottom 131a is opened or cut off from the remaining separator material, the two layers 130c and 130d can be readily peeled apart. Thus the facing surfaces of layers 130c and 130d remain not glued and not heat sealed or chemically laminated together except that the bottom edges 131 are heat sealed to form closed bottom 131a. The completed wound separator 130 has the configuration shown in Figs. 3B and 3C. After the cathode disks 120a have been placed into housing 70, the completed separator 130 (Fig. 3B) can be inserted in the cell housing 70 so that the outer surface of separator 130 lies against the inside surface of the cathode disks 120a (Figs. 1 and 1A). The separator top edge 132 rests flush against the bottom surface 220 of insulating disk 20 and the closed bottom 131a rests against the closed end 17 of casing 70 as shown in Figs. 1 and 1A. Anode material 140 is then inserted so that the separator 130 lies flush between cathode disks 120a and anode 140. The top edge 132 is sufficiently resilient that it remains flush against the bottom surface 220 of insulating disk 20 during the life of the cell.

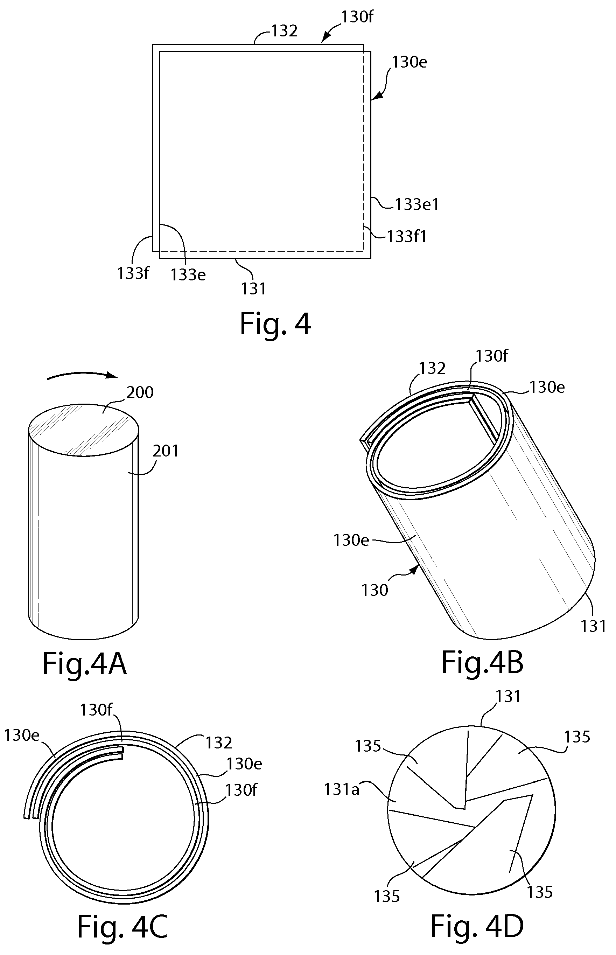

In another embodiment of the invention the separator 130 may have the configuration shown in Fig. 4B. In this embodiment the separator 130 is formed of two layers 130e and 130f wherein the layers may be of same size and shape and placed directly over each other so that respective edges of each sheet coincide with each other as shown in Fig. 4. In this embodiment the separator 130 is formed of two layers 130e and 130f wherein the first layer 130e forms an outer layer which covers the second layer 130f, that is, underlying inner layer 130f as shown best in Fig. 3B. Such separator configuration (Fig. 4B) may be formed by simply placing a first (top) sheet 130e onto an underlying second sheet 130f so that the exposed vertical leading edge 133e of first (top) sheet 130e coincides with underlying leading edge 133f of underlying sheet 130f in the manner shown in Fig. 4. And the trailing edge 133e1 of the first (top) sheet 130e and trailing edge 133f1 of underlying sheet 130f coincide as shown in Fig. 4. The two sheets 130e and 130f may be of rectangular configuration and of same size. The two overlaid sheets 130e and 130f (Fig. 4) can be wound by placing them against the outer surface 201 of a stainless steel mandrel 200 and spinning the mandrel clockwise as indicated in Fig. 4A. A Hibar Winder, e.g. Model S0548 (Hibar Systems Limited, Toronto Canada) can be used to accomplish the winding. Heat is not applied to the separator layers 130e and 130f during the winding. As a final step in the winding process the separator bottom edge 131 may be closed by folding the bottom edge of each sheet 130e and 130f inwardly forming folds 135 and then heat sealing folds 135 to form a closed bottom 131a as shown in Fig. 4D. There is preferably no glue inserted between the facing surfaces of the two separator layers 130e and 130f during the winding process. And the facing surfaces of the separator layers, that is between top edge 132 and bottom edge 131, are thus not chemically bonded together and are not laminated together. The facing surfaces of the separator layers are in contact with each other but are not bonded together between top edge 132 and bottom edge 131. Rather, the facing surfaces of the separator layers are held together primarily because of the closed bottom 131a, which is the only portion of the separator that is heat sealed in order to close the bottom end of the separator. The separator layers are durable enough so that they do not crack or tear even though they are not bonded together between edges 131 and 132. It is an advantage not to employ glue between the two separator layers, since such glue or other bonding material can retard the rate of electrolyte ion transport through completed separator 130, especially when the cell is used in high power application. Once the closed bottom 131a is opened or cut off from the remaining separator material, the two layers 130e and 130f can be readily peeled apart. Thus the facing surfaces of layers 130e and 130f remain not glued and not heat sealed or chemically laminated together except that the bottom edges 131 are heat sealed to form closed bottom 131a. The completed wound separator 130 has the configuration shown in Figs. 4B and 4C. After the cathode disks 120a have been placed into housing 70, the completed separator 130 (Fig. 4B) can be inserted in the cell housing 70 so that the outer surface of separator 130 lies against the inside surface of the cathode disks 120a (Figs. 1 and 1A). The separator top edge 132 rests flush against the bottom surface 220 of insulating disk 20 and the closed bottom 131a rests against the closed end 17 of casing 70 as shown in Figs. 1 and 1A. Anode material 140 is then inserted so that the separator 130 lies flush between cathode disks 120a and anode 140. The top edge 132 is sufficiently resilient that it remains flush against the bottom surface 220 of insulating disk 20 during the life of the cell.

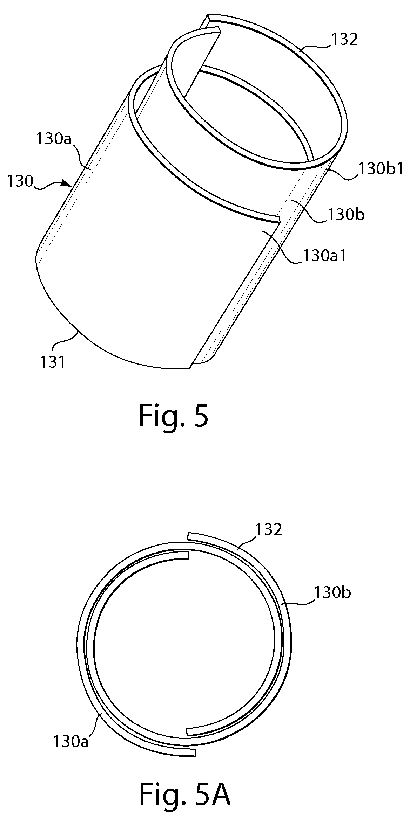

The embodiment shown in Fig. 2B may be modified so that the top edge of the separator sheet 130b may be extended so that it is higher than top edge of separator sheet 130a. Such configuration is shown in Fig. 5 wherein top edge 130b1 of separator sheet 130b extends beyond, that is, is higher than top edge 130a1 of separator sheet 130a. The configuration of the wound separator as shown in Fig. 5 is otherwise the same as shown and described with respect to Fig. 2B. Thus, the top view of the wound separator sheets Fig. 5A is the same as the top view shown in Fig. 2C. The bottom edge 131 of the separator shown in Fig. 5 may be folded and heat sealed forming the folded bottom shown in Fig. 2D.

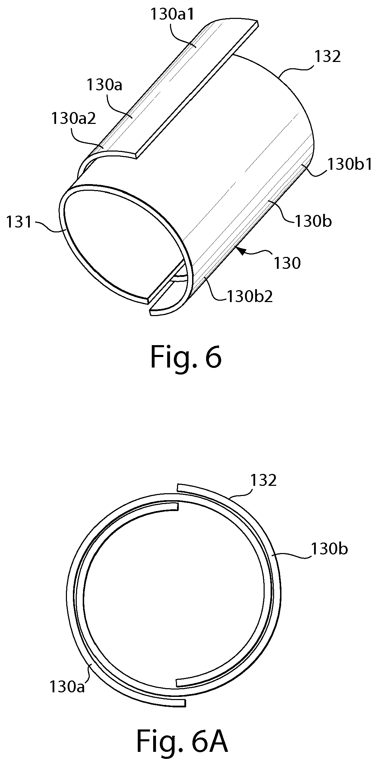

The embodiment shown in Fig. 2B may also be modified so that the bottom edge of the separator sheet 130b may be extended so that it is lower than the bottom edge of separator sheet 130a. Such configuration is shown in Fig. 6 wherein bottom edge 130b2 of separator sheet 130b extends beyond, that is, is lower than bottom edge 130a2 of separator sheet 130a. The configuration of the wound separator as shown in Fig. 6 is otherwise the same as shown and described with respect to Fig. 2B. Thus, the top view of the wound separator sheets Fig. 6A is the same as the top view shown in Fig. 2C. The bottom edge 131 of the separator shown in Fig. 6 may be folded and heat sealed forming the folded bottom shown in Fig. 2D.

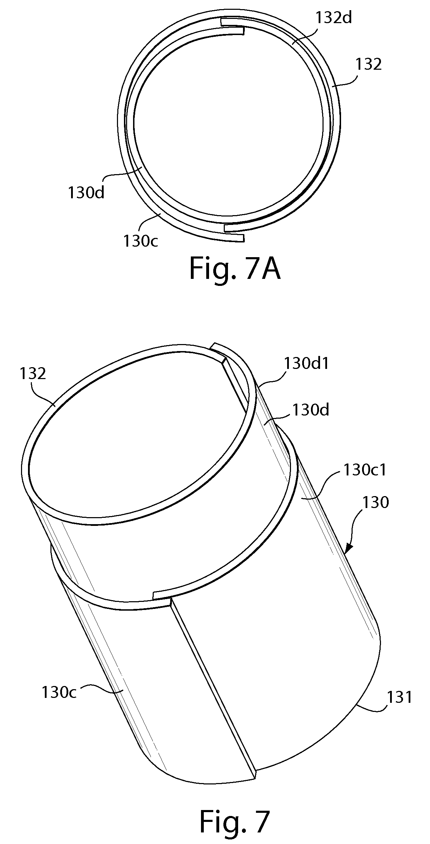

The embodiment shown in Fig. 3B may be modified so that the top edge of the inner separator sheet 130d may be extended so that it is higher than top edge of outer separator sheet 130c. Such configuration is shown in Fig. 7 wherein top edge 130d1 of inner separator sheet 130d extends beyond, that is, is higher than top edge 130c1 of outer separator sheet 130c. The configuration of the wound separator as shown in Fig. 7 is otherwise the same as shown and described with respect to Fig. 3B. Thus, the top view of the wound separator sheets Fig. 7A is the same as the top view shown in Fig. 3C. The bottom edge 131 of the separator shown in Fig. 7 may be folded and heat sealed forming the folded bottom shown in Fig. 3D.

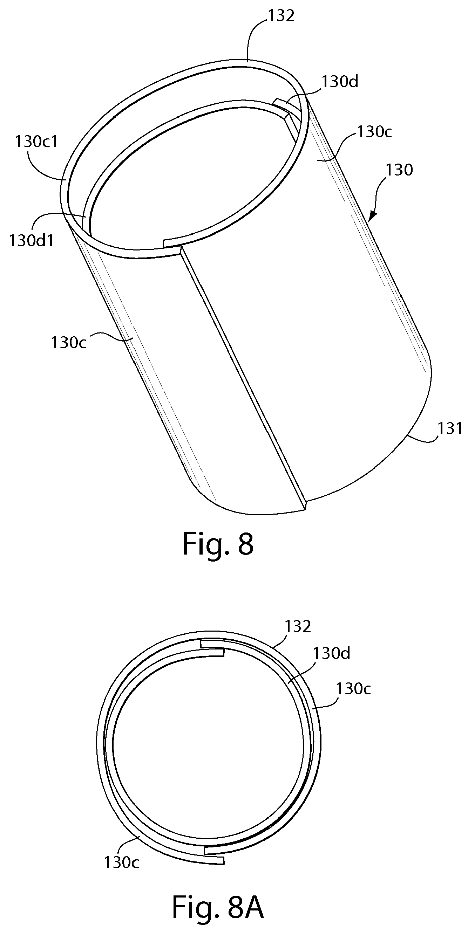

The embodiment shown in Fig. 3B may be modified so that the top edge of the outer separator sheet 130c may be extended so that it is higher than top edge of inner separator sheet 130d. Such configuration is shown in Fig. 8 wherein top edge 130c1 of outer separator sheet 130c extends beyond, that is, is higher than top edge 130d1 of separator sheet 130d. The configuration of the wound separator as shown in Fig. 8 is otherwise the same as shown and described with respect to Fig. 3B. Thus, the top view of the wound separator sheets Fig. 8A is the same as the top view shown in Fig. 3C. The bottom edge 131 of the separator shown in Fig. 8 may be folded and heat sealed forming the folded bottom shown in Fig. 3D.

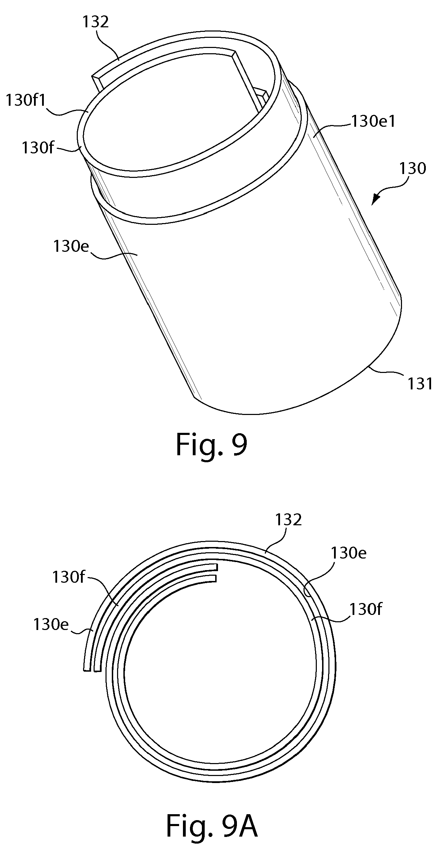

The embodiment shown in Fig. 4B may be modified so that the top edge of the inner separator sheet 130f may be extended so that it is higher than top edge of outer separator sheet 130e. Such configuration is shown in Fig. 9 wherein top edge 130f1 of inner separator sheet 130f extends beyond, that is, is higher than top edge 130e1 of outer separator sheet 130e. The configuration of the wound separator as shown in Fig. 9 is otherwise the same as shown and described with respect to Fig. 4B. Thus, the top view of the wound separator sheets Fig. 9A is the same as the top view shown in Fig. 4C. The bottom edge 131 of the separator shown in Fig. 9 may be folded and heat sealed forming the folded bottom shown in Fig. 4D.

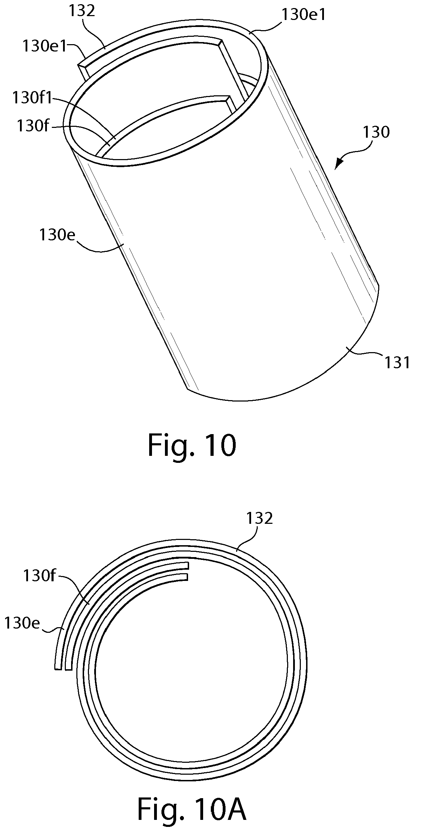

The embodiment shown in Fig. 4B may be modified so that the top edge of the outer separator sheet 130e may be extended so that it is higher than top edge of inner separator sheet 130f. Such configuration is shown in Fig. 9 wherein top edge 130e1 of outer separator sheet 130e extends beyond, that is, is higher than top edge 130f1 of inner separator sheet 130f. The configuration of the wound separator as shown in Fig. 9 is otherwise the same as shown and described with respect to Fig. 4B. Thus, the top view of the wound separator sheets Fig. 10A is the same as the top view shown in Fig. 4C. The bottom edge 131 of the separator shown in Fig. 10 may be folded and heat sealed forming the folded bottom shown in Fig. 4D.

The following is a description of representative chemical composition of anode 140, cathode 120 for an alkaline cell 10 which may employed irrespective of cell size. The following chemical compositions are representative basic compositions for use in cells having the separator 130 of the present invention, and as such are not intended to be limiting.

In the above described embodiments a representative cathode 120 can comprise manganese dioxide, graphite and aqueous alkaline electrolyte; the anode 140 can comprise zinc and aqueous alkaline electrolyte. The aqueous electrolyte comprises a conventional mixture of KOH, zinc oxide, and gelling agent. The anode material 140 can be in the form of a gelled mixture containing mercury free (zero-added mercury) zinc alloy powder. That is, the cell can have a total mercury content less than about 50 parts per million parts of total cell weight, preferably less than 20 parts per million parts of total cell weight. The cell also preferably does not contain any added amounts of lead and thus is essentially lead-free, that is, the total lead content is less than 30 ppm, desirably less than 15 ppm of the total metal content of the anode. Such mixtures can typically contain aqueous KOH electrolyte solution, a gelling agent (e.g., an acrylic acid copolymer available under the tradename CARBOPOL C940 from B.F. Goodrich), and surfactants (e.g., organic phosphate ester-based surfactants available under the trade designation GAFAC RM510 from Rhône Poulenc). Such a mixture is given only as an illustrative example and is not intended to restrict the present invention. Other representative gelling agents for zinc anodes are disclosed in U.S. Patent No. 4,563,404.

The cathode 120 can desirably have the following composition: 87-93 wt% of electrolytic manganese dioxide (e.g., Trona D from Kerr-McGee), 2-6 wt% of graphite, 5-7 wt% of a 7-10 Normal aqueous KOH solution having a KOH concentration of about 30-40 wt%; and 0.1 to 0.5 wt% of an optional polyethylene binder. The electrolytic manganese dioxide typically has an average particle size between about 1 and 100 micron, desirably between about 20 and 60 micron. The graphite is typically in the form of natural, or expanded graphite or mixtures thereof. The graphite can also comprise graphitic carbon nanofibers alone or in admixture with natural or expanded graphite. Such cathode mixtures are intended to be illustrative and are not intended to restrict this invention.

The anode material 150 comprises: Zinc alloy powder 60 to 73% wt% (99.9 wt% purity zinc containing 200 to 500 ppm indium as alloy and plated material), an aqueous KOH solution comprising about 35 wt% KOH and about 2 wt% ZnO; a cross-linked acrylic acid polymer gelling agent available commercially under the tradename "CARBOPOL C940" from B.F. Goodrich (e.g., 0.5 to 2 wt%) and a hydrolyzed polyacrylonitrile grafted onto a starch backbone commercially available commercially under the tradename "WATERLOCK A-221" from Grain Processing Co. (between 0.01 and 0.5 wt.%); dionyl phenol phosphate ester surfactant available commercially under the tradename "RM-510" from Rhone-Poulenc (50 ppm). The zinc alloy mean average particle size is desirably between about 30 and 350 micron. The bulk density of the zinc in the anode (anode porosity) is between about 1.75 and 2.2 grams zinc per cubic centimeter of anode. The percent by volume of the aqueous electrolyte solution in the anode is preferably between about 69.2 and 75.5 percent by volume of the anode. The cell can be balanced in the conventional manner so that the mAmp-hr capacity of MnO₂ (based on 308 mAmp-hr per gram MnO₂) divided by the mAmp-hr capacity of zinc alloy (based on 820 mAmp-hr per gram zinc alloy) is about 1.

A preferred separator 130 of the invention may have the configuration as shown and described herein in Figs. 2-10. The separator 130 is electrolyte permeable with alkaline electrolyte such as aqueous potassium hydroxide. Separator 130 nevertheless prevents passage of zinc dendrites therethrough even when the cell is used primarily or intermittently in high power application, that is, in powering digital cameras and the like. The separator 130 of the invention is readily manufactured as above described. The separator 130 of the invention is composed of two sheets of non woven separator material, e.g. (130a and 130b),or (130c and 130d) or (130e and 130f) which can be wound into a tubular configuration as above described with reference to Figs. 2-10 herein. The two sheets are of dissimilar material. The facing surfaces of the two separator sheets are not glued together. Rather, the facing surfaces of the two separator sheets are pressed together employing a Hibar Winder as above described without applying any glue between the two facing surfaces. However, the bottom edge 131 of the wound separator is folded closed and heat sealed as above describe. The closed and heat sealed bottom edge 131 keeps the two wound separator sheets from coming apart even though their facing surfaces are not bonded together.

With reference to the representative separator configurations as in Figs. 2-10 having of a first and second layer therein, the first layer is desirably formed of blend of polyvinylalcohol fibers and rayon (cellulosic) fibers. (Rayon is a semisynthetic material composed of regenerated cellulose or manufactured fibers composed of regenerated cellulose in which substituents have replaced not more than 15% of the hydrogen contained in the hydroxyl groups.) A preferred composition is a sheet formed of a blend of polyvinylalcohol fibers (80 wt%) and rayon fibers (20 wt%) available under the trade designation PA25A material from Papeterie de Mauduit. This same material may be calendered or compressed and as such is available under the trade designation PA25AC material. The first layer composed of the PA25A or PA25AC material desirably has a thickness of between about 30 and 120 micron (dry), and a basis weight of between about 20 and 40 g/m2 (dry), and a porosity of between 75 and 85 percent (pore volume/total volume x 100). Alternative materials may be employed. For example, instead of comprising a blend of polyvinylalcohol fibers and rayon fibers, the first layer may be composed of a 100 percent cellulosic material. Another suitable material for the first layer may be of 100% NYLON 66 fiber.

With reference to the separator configurations as in Figs. 2-9 herein a preferred composition for the second layer is a material composed of a blend of wood pulp fiber and polyvinylalcohol fibers. A preferred composition for the second layer is a blend of 82 wt% wood pulp and 18 wt% polyvinylalcohol fibers, which is available under the trade designation BH30 sheeting from NKK Nippon Kodoshi Corp. A desirable thickness of such material to form the second layer may be about 30 micron (dry). The second layer formed of such material may have a basis weight of about 20 gm/m² (dry) and a porosity of between about 50 and 70 percent. An alternative material for the second layer may be formed of a blend of 75 wt% wood pulp and 25 wt% polyvinylalcohol fibers, which is available under the trade designation BF50 material from NKK Nippon Kodoshi Corp. A second layer formed of this latter material desirably has a thickness of about 50 micron, a basis weight of about 32 g/m² and a porosity of about 65 percent.

The above described preferred composition for the first and second layers which make up the separator 130 of the invention in accordance with the preferred configurations shown herein in Figs. 2-10 may be interchanged. That is, the first layer may be employed to form separator 130 inner layer and second layer may be employed to form separator 130 outer layer or vice versa. For example, in the separator 130 configuration shown in Fig. 2B the first layer composition above described may become separator sheet 130a and the second layer composition above described may become separator sheet 130b. Alternatively, the second layer composition above described may become separator sheet 130a and the first layer composition above described may become separator sheet 130b. The same applies to the separator configuration shown in Figs. 5 and 6, which has the same as separator configuration as in Fig. 2B, except that one of the layers is vertically extended as shown.

In the separator 130 configuration shown in Fig. 3B the first layer composition above described preferably forms the inner separator sheet 130d and the second layer composition above described preferably forms the outer separator sheet 130c. However, the first layer composition above described may be used to form the outer separator sheet 130c and the second layer composition above described may be used to form the inner separator layer 130d. The same applies to the separator configuration shown in Figs. 7 and 8, which has the same as separator configuration as in Fig. 3B, except that one of the layers is vertically extended as shown.

Similarly, in the separator 130 configuration shown in Fig. 4B the first layer composition above described preferably forms the inner separator sheet 130f and the second layer composition above described preferably forms the outer separator sheet 130e. However, the first layer composition above described may be used to form the outer separator sheet 130e and the second layer composition above described may be used to form the inner separator layer 130f. The same applies to the separator configuration shown in Figs. 9 and 10, which has the same as separator configuration as in Fig. 4B, except that one of the layers is vertically extended as shown.

### Performance Tests

### Example 1

A comparative AA size alkaline cell 10 employing a conventional alkaline cell separator and a test cell 10 employing the dual layer separator 130 of the invention was prepared. The cells were the same in all respects except that the test cell employed a separator 130 of the invention and the comparative cell employed a conventional separator. The anode 140 comprised zinc and the cathode stacked disks 120a comprised manganese dioxide as above described. The respective anode and cathode compositions for the comparative cells and test cells were the same and the electrolyte, namely, aqueous potassium hydroxide used in each cell was also the same.

The separator 130 employed in the comparative cell contained a typical prior art alkaline cell separator formed an outer sheet of cellophane and an inner sheet composed of a blend of nonwoven rayon and polyvinylalcohol fibers. The two sheets were of same size and shape and were overlaid one sheet onto the other. The two sheets were glued together using polyacrylic acid forming a dual layer separator sheet, which was wound for 1.25 turns on a mandrel surface 201 using a Hibar Winder Model SO548. The bottom edge of the wound separator was folded and heat sealed using the Hibar Winder thereby forming the completed tube shaped comparative separator 130. This comparative separator 130 was inserted into a cell 10 so that it lay between anode 140 and cathode 120 as shown in Fig. 1A thus forming the comparative AA size alkaline cell.

The separator 130 employed in the test cell was composed of the dual separator sheets 130e and 130f forming the separator embodiment 130 of the invention as shown in Fig. 4B. Inner layer 130f was composed of a blend of 75 wt% wood pulp fibers and 25 wt% polyvinylalcohol fibers available as a sheet under the trade designation BF50 sheeting from NKK Nippon Kodoshi Corp. The outer layer 130e was composed of polyvinylalcohol fibers forming a sheet available under the trade designation PA25A sheeting from Papeterie de Mauduit. The two sheets were placed one onto the other as shown in Fig. 4 and wound for 1.25 turns using the Hibar Winder. The bottom edge 131 of the wound separator was folded and then heat sealed to form test separator 130 having the configuration shown in Fig. 4B. The facing surfaces of sheet 130e and 130f, that is, the facing surfaces between top edge 132 and bottom edge 131, remained not bonded and not glued to each other. This test separator 130 having the configuration shown in Fig. 4B was inserted into test cell 10 so that it lay between anode 140 and cathode 120 as shown in Fig. 1A thus forming the AA size alkaline test cell.

Groups of control AA size cells and test AA size cells were then subjected to digital camera test (DIGICAM test) consisting of the following pulse test protocol wherein each of the cells was drained by applying pulsed discharge cycles to the cell: Each cycle consists of both a 1.5 Amp pulse for 2 seconds followed immediately by a 0.65 Amp pulse for 28 seconds. After every 10 pulsed cycles (elapsed time 5 minutes) the cells were allowed to rest for 55 minutes. The cycles are continued until a cutoff voltage of 1.05V is reached. The number of cycles required to reach the cutoff voltage were recorded. The digital camera test is used to mimic the general use of the cell to power a typical digital camera.

The test cells consistently showed better performance than the comparative cells as both groups of cells were discharged to cutoff voltage of 1.05 volts using the above indicated DIGICAM test. The test cells took an average of about 91 'pulsed cycles before reaching the cutoff voltage whereas the comparative cells took an average of about 83 pulsed cycles to reach the same cutoff voltage of 1.05 volts. This represented a 9.6 percent performance improvement of the test alkaline cells which employed the separator of the invention compared to the comparative alkaline cells which employed a conventional separator.

### Example 2

Test AA size alkaline cells 10 employing the dual layer separator 130 of the invention were prepared. The anode 140 comprised zinc and the cathode stacked disks 120a comprised manganese dioxide. The electrolyte was aqueous potassium hydroxide. The test cells were the same in all respects and employed a separator 130 of the invention having the configuration shown in Fig. 2B. The separator 130 employed in the test cells was composed of the dual separator sheets 130a and 130b which were overlaid to form the separator embodiment 130 of the invention as shown in Fig. 2B. The first sheet 130a was composed of a blend of 82 wt% wood pulp fibers and 18 wt% polyvinylalcohol fibers available as a sheet under the trade designation BH30 sheeting from NKK Nippon Kodoshi Corp. The second sheet 130b was composed of polyvinylalcohol and rayon fibers forming a sheet available under the trade designation PA25A sheeting from Papeterie de Mauduit. The two sheets were placed one onto the other as shown in Fig. 2 and wound using the Hibar Winder. The bottom edge 131 of the wound separator was folded and then heat sealed to form test separator 130 having the configuration shown in Fig. 2B. The facing surfaces of sheet 130a and 130b, that is, the facing surfaces between top edge 132 and bottom edge 131, remained not bonded and not glued to each other. The test separator 130 having the configuration shown in Fig. 2B was inserted into test cell 10 so that it lay between anode 140 and cathode 120 as shown in Fig. 1A thus forming the AA size alkaline test cell.

A large number (dozens) of fresh test cells were tested for any sign of voltage instability due to dropping the cells onto a hard surface. The test cells were dropped onto concrete from a height of 1 meter. The cells were dropped 6 times from this height. They were dropped 4 times while in a vertical position and 2 times while in a horizontal position. The cells' open circuit voltage was then measured. The open circuit voltage measured about 1.6 volts and there was no change in open circuit voltage before and after dropping the cells onto the concrete. Also a number of the test cells were randomly selected after dropping them onto concrete and cut open and inspected. The top edge 132 of the separator remained flush against the bottom surface of sealing disk 20. There were no signs that any portion of the separator had become dislodged or that any anode material had entered the cathode area.

Although the present invention has been described with respect to specific embodiments, it should be appreciated that variations are possible within the concept of the invention. Accordingly, the invention is not intended to be limited to the specific embodiments described herein but will be defined by the claims and equivalents thereof.

## Claims

1. An electrochemical cell comprising a housing having a first end an opposing second end and cylindrical side wall therebetween and an end cap assembly inserted into one of said ends closing said housing, wherein said cell has an anode material comprising zinc, an aqueous alkaline electrolyte solution, a cathode material comprising manganese dioxide, and a separator between said anode and cathode, wherein said separator comprises a first and a second individual sheet, wherein each of said sheets has a leading edge and an opposing trailing edge, wherein said sheets are applied one onto the other so that at least a substantial portion of the first sheet faces and contacts a substantial portion of the second sheet and said sheets are wound forming said separator having a tubular shape, said leading edge of each of said sheets being defined as the edge of each of said sheets leading in the direction of wind, and
wherein the wound separator has a top edge and an opposing bottom edge, said bottom edge is folded and heat sealed to form a closed bottom end of said wound separator, wherein said top edge defines an open end of said wound separator when the wound separator is viewed in vertical position with the open end on top, wherein the remaining portion of the first and second sheets facing each other are in contact with each other but are not glued and are not bonded to each other, said facing portions of the first and second sheets forming the separator body.

2. The cell of claim 1 wherein the trailing edge of one of said first and second sheets extends beyond the other in the direction opposite to the direction of wind.

3. The cell of claim 1 wherein said sheets are wound with the first sheet placed over the second sheet so that the leading edge of the first sheet extends beyond the leading edge of the second sheet in the direction of wind and the trailing edge of the second sheet extends beyond the trailing edge of the first sheet in the direction opposite the direction of wind.

4. The cell of claim 1 wherein said sheets are wound with the first sheet placed over the second sheet so that the leading edge of the second sheet extends beyond the leading edge of the first sheet in the direction of wind and the trailing edge of the first sheet extends beyond the trailing edge of the second sheet in the direction opposite the direction of wind.

5. The cell of claim 1 wherein at least one of said first and second sheets includes material therein dissimilar from and not included in the other of said sheets.

6. The cell of claim 1 wherein said wound separator has an outer surface and an inner surface and said wound separator is inserted into said cell so that a substantial portion of said outer surface contacts the cathode material and a substantial portion of said inner surface contacts the anode material.

7. The cell of claim 6 wherein at least one of said first and second sheets comprises mercerized wood pulp or rayon.

8. The cell of claim 7 wherein each of said first and second sheets comprises polyvinyl alcohol fibers.

9. The cell of claim 6 wherein the first sheet comprises polyvinylalcohol fibers and mercerized wood pulp and the second sheet comprises polyvinylalcohol fiber.

10. The cell of claim 6 wherein the first sheet comprises polyvinylalcohol fibers and mercerized wood pulp the second sheet comprises polyvinylalcohol fiber and rayon fiber.

11. The cell of claim 1 wherein the first sheet consists essentially of polyvinylalcohol fibers and mercerized wood pulp and the second sheet consists essentially of polyvinylalcohol fiber and rayon fiber.

12. The cell of claim 1 wherein the separator is inserted into said cell housing so that the separator body is held pressed between said anode and cathode and the closed bottom edge of the separator abuts the end of said housing opposing said end cap assembly.

13. The cell of claim 1 wherein at least a portion of the first sheet forms a portion of the outer surface of said wound separator and a portion of the second sheet forms at least another portion of the outer surface of said wound separator.

14. The cell of claim 13 wherein the top edge of the first sheet extends vertically higher than the top edge of the second sheet or the top edge of the second sheet extends vertically higher than the top edge of the first sheet.

## Patentansprüche

1. Elektrochemische Zelle, umfassend ein Gehäuse mit einem ersten Ende, einem entgegengesetzten zweiten Ende und einer zylindrischen Seitenwand dazwischen und einer in eines der Enden eingeführten Endkappenanordnung, die das Gehäuse verschließt, wobei die Zelle ein Anodenmaterial, das Zink umfasst, eine wässrige alkalische Elektrolytlösung, ein Kathodenmaterial, das Mangandioxid umfasst, und einen Separator zwischen der Anode und der Kathode aufweist, wobei der Separator eine erste und eine zweite Einzellage umfasst, wobei jede der Lagen einen vorderen Rand und einen entgegengesetzten hinteren Rand aufweist, wobei die Lagen so aufeinander aufgebracht sind, dass mindestens ein wesentlicher Abschnitt der ersten Lage einem wesentlichen Abschnitt der zweiten Lage zugewandt ist und diesen berührt, und die Lagen gewickelt sind und dadurch den Separator mit einer Röhrenform bilden, wobei der vordere Rand jeder der Lagen als der Rand jeder der Lagen definiert ist, der in die Wickelrichtung weist, und
wobei der gewickelte Separator einen oberen Rand und einen entgegengesetzten unteren Rand aufweist, wobei der untere Rand gefaltet und heißversiegelt ist, um ein geschlossenes unteres Ende des gewickelten Separators zu bilden, wobei der obere Rand ein offenes Ende des gewickelten Separators definiert, wenn der gewickelte Separator in vertikaler Position mit dem offenen Ende oben betrachtet wird, wobei der übrige, einander zugewandte Abschnitt der ersten und zweiten Lage miteinander in Kontakt sind, jedoch nicht zusammengeklebt und nicht aneinander gebunden sind, wobei die einander zugewandten Abschnitte der ersten und zweiten Lage den Separatorkörper bilden.

2. Zelle nach Anspruch 1, wobei sich der hintere Rand einer der ersten und der zweiten Lage in der der Wickelrichtung entgegengesetzten Richtung über den anderen hinaus erstreckt.

3. Zelle nach Anspruch 1, wobei die Lagen mit über der zweiten Lage platzierter erster Lage gewickelt sind, so dass sich der vordere Rand der ersten Lage in der Wickelrichtung über den vorderen Rand der zweiten Lage hinaus erstreckt und sich der hintere Rand der zweiten Lage in der der Wickelrichtung entgegengesetzten Richtung über den hinteren Rand der ersten Lage hinaus erstreckt.

4. Zelle nach Anspruch 1, wobei die Lagen mit über der zweiten Lage platzierter erster Lage gewickelt sind, so dass sich der vordere Rand der zweiten Lage in der Wickelrichtung über den vorderen Rand der ersten Lage hinaus erstreckt und sich der hintere Rand der ersten Lage in der der Wickelrichtung entgegengesetzten Richtung über den hinteren Rand der zweiten Lage hinaus erstreckt.

5. Zelle nach Anspruch 1, wobei mindestens eine der ersten und der zweiten Lagen Material darin enthält, das von der anderen der Lagen verschieden und nicht darin enthalten ist.

6. Zelle nach Anspruch 1, wobei der gewickelte Separator eine Außenoberfläche und eine Innenoberfläche aufweist und der gewickelte Separator so in die Zelle eingeführt ist, dass ein wesentlicher Abschnitt der Außenoberfläche das Kathodenmaterial berührt und ein wesentlicher Abschnitt der Innenoberfläche das Anodenmaterial berührt.

7. Zelle nach Anspruch 6, wobei mindestens eine der ersten und der zweiten Lagen mercerisierten Holzfaserstoff oder Rayon umfasst.

8. Zelle nach Anspruch 7, wobei jede der ersten und der zweiten Lagen Polyvinylalkohol-Fasern umfasst.

9. Zelle nach Anspruch 6, wobei die erste Lage Polyvinylalkohol-Fasern und mercerisierten Holzfaserstoff umfasst und die zweite Lage Polyvinylalkohol-Faser umfasst.

10. Zelle nach Anspruch 6, wobei die erste Lage Polyvinylalkohol-Fasern und mercerisierten Holzfaserstoff umfasst und die zweite Lage Polyvinylalkohol-Faser und Rayon-Faser umfasst.

11. Zelle nach Anspruch 1, wobei die erste Lage im Wesentlichen aus Polyvinylalkohol-Fasern und mercerisiertem Holzfaserstoff besteht und die zweite Lage im Wesentlichen aus Polyvinylalkohol-Faser und Rayon-Faser besteht.

12. Zelle nach Anspruch 1, wobei der Separator so in das Zellgehäuse eingeführt ist, dass der Separatorkörper zwischen die Anode und die Kathode gepresst gehalten wird und der geschlossene untere Rand des Separators an das Ende des Gehäuses angrenzt, das der Endkappenanordnung gegenüberliegt.

13. Zelle nach Anspruch 1, wobei mindestens ein Abschnitt der ersten Lage einen Abschnitt der Außenoberfläche des gewickelten Separators bildet und ein Abschnitt der zweiten Lage mindestens einen anderen Abschnitt der Außenoberfläche des gewickelten Separators bildet.

14. Zelle nach Anspruch 13, wobei sich der obere Rand der ersten Lage vertikal höher erstreckt als der obere Rand der zweiten Lage oder sich der obere Rand der zweiten Lage vertikal höher erstreckt als der obere Rand der ersten Lage.

## Revendications

1. Pile électrochimique comprenant un logement comportant une première extrémité, une deuxième extrémité opposée et une paroi latérale cylindrique entre elles et un ensemble de coiffe d'extrémité inséré dans une desdites extrémités fermant ledit logement, où ladite pile a un matériau d'anode comprenant du zinc, une solution aqueuse d'électrolyte alcalin, un matériau de cathode comprenant du dioxyde de manganèse, et un séparateur entre lesdites anode et cathode, dans laquelle ledit séparateur comprend des première et deuxième feuilles individuelles, dans laquelle chacune desdites feuilles comporte un bord avant et un bord arrière opposé, dans laquelle lesdites feuilles sont appliquées l'une sur l'autre de sorte qu'au moins une partie substantielle de la première feuille fait face à, et vient en contact avec, une partie substantielle de la deuxième feuille et lesdites feuilles sont enroulées en formant ledit séparateur possédant une forme tubulaire, ledit bord avant de chacune desdites feuilles étant défini comme le bord de chacune desdites feuilles menant dans la direction d'enroulement, et
dans laquelle le séparateur enroulé comporte un bord supérieur et un bord inférieur opposé, ledit bord inférieur est plié et thermoscellé pour former une extrémité inférieure fermée dudit séparateur enroulé, dans laquelle ledit bord supérieur définit une extrémité ouverte dudit séparateur enroulé lorsque le séparateur enroulé est observé en position verticale avec l'extrémité ouverte en haut, dans laquelle les parties restantes des première et deuxième feuilles se faisant face sont en contact entre elles mais ne sont pas collées et ne sont pas liées les unes aux autres, lesdites parties se faisant face des première et deuxième feuilles formant le corps de séparateur.

2. Pile selon la revendication 1, dans laquelle le bord arrière d'une parmi lesdites première et deuxième feuilles s'étend au-delà de l'autre dans la direction opposée à la direction d'enroulement.

3. Pile selon la revendication 1, dans laquelle lesdites feuilles sont enroulées avec la première feuille placée au-dessus de la deuxième feuille de sorte que le bord avant de la première feuille s'étend au-delà du bord avant de la deuxième feuille dans la direction d'enroulement et le bord arrière de la deuxième feuille s'étend au-delà du bord arrière de la première feuille dans la direction opposée à la direction d'enroulement.

4. Pile selon la revendication 1, dans laquelle lesdites feuilles sont enroulées avec la première feuille placée au-dessus de la deuxième feuille de sorte que le bord avant de la deuxième feuille s'étend au-delà du bord avant de la première feuille dans la direction d'enroulement et le bord arrière de la première feuille s'étend au-delà du bord arrière de la deuxième feuille dans la direction opposée à la direction d'enroulement.

5. Pile selon la revendication 1, dans laquelle au moins une desdites première et deuxième feuilles inclut en son sein un matériau différent de, et non inclus dans, l'autre desdites feuilles.

6. Pile selon la revendication 1, dans laquelle ledit séparateur enroulé a une surface externe et une surface interne et ledit séparateur enroulé est inséré dans ladite pile de sorte qu'une partie substantielle de ladite surface externe vient en contact avec le matériau de cathode et une partie substantielle de ladite surface interne vient en contact avec le matériau d'anode.

7. Pile selon la revendication 6, dans laquelle au moins l'une desdites première et deuxième feuilles comprend de la pâte de bois mercerisée ou de la rayonne.

8. Pile selon la revendication 7, dans laquelle chacune desdites première et deuxième feuilles comprend des fibres d'alcool polyvinylique.

9. Pile selon la revendication 6, dans laquelle la première feuille comprend des fibres d'alcool polyvinylique et de la pâte de bois mercerisée et la deuxième feuille comprend une fibre d'alcool polyvinylique.

10. Pile selon la revendication 6, dans laquelle la première feuille comprend des fibres d'alcool polyvinylique et de la pâte de bois mercerisée, la deuxième feuille comprend une fibre d'alcool polyvinylique et une fibre de rayonne.

11. Pile selon la revendication 1, dans laquelle la première feuille est constituée pratiquement de fibres d'alcool polyvinylique et de pâte de bois mercerisée et la deuxième se compose essentiellement de fibre d'alcool polyvinylique et de fibre de rayonne.

12. Pile selon la revendication 1, dans laquelle le séparateur est inséré dans ledit logement de pile de sorte que le corps de séparateur est maintenu pressé entre lesdites anode et cathode et le bord inférieur fermé du séparateur vient en butée contre l'extrémité dudit logement opposée audit ensemble de coiffe d'extrémité.

13. Pile selon la revendication 1, dans laquelle au moins une partie de la première feuille forme une partie de la surface externe dudit séparateur enroulé et une partie de la deuxième feuille forme au moins une autre partie de la surface externe dudit séparateur enroulé.

14. Pile selon la revendication 13, dans laquelle le bord supérieur de la première feuille s'étend verticalement plus haut que le bord supérieur de la deuxième feuille ou le bord supérieur de la deuxième feuille s'étend verticalement plus haut que le bord supérieur de la première feuille.
